# EUROPEAN PATENT APPLICATION

(11) **EP 3 335 908 A1**
(43) Date of publication of application: **20.06.2018**
(21) Application number: 17201690.9
(22) Date of filing: 14.11.2017
(51) Int. Cl.: B60C 11/04, B60C 11/13

(54) **TIRE TREAD PATTERN PROVIDED WITH AN ANTI-STONE STRUCTURE**

(30) Priority: 16.12.2016 CN 201611170848; 16.12.2016 CN 201621387449 U
(71) Applicant: Aeolus Tyre Co., Ltd., 454003 Jiaozuo Henan (CN)
(72) Inventor: WANG, Qingnian, Jiaozuo, Henan 454003 (CN); LIANG, Qianqing, Jiaozuo, Henan 454003 (CN); ZHOU, Jing, Jiaozuo, Henan 454003 (CN); LIU, Yong, Jiaozuo, Henan 454003 (CN); WANG, Junbo, Jiaozuo, Henan 454003 (CN); HE, Zhiyuan, Jiaozuo, Henan 454003 (CN)
(74) Representative: Office Kirkpatrick

(57) **Abstract**

A tire tread pattern provided with an anti-stone structure, which is composed of an annular groove (2) that is continuous along the circumferential direction and a pattern block (3), the annular groove (2) is defined by a discontinuous first chamfered edge (6), a first polygonal surface (8) parallel to the tread is arranged at a portion in the annular groove (2) that is concave relative to the first chamfered edge (6), a second chamfered edge (4) and a third chamfered edge (10) of the first polygonal surface (8) separately extend along the groove bottom direction to form two second polygonal surfaces (9), the two second polygonal surfaces (9) and the first polygonal surface (8) share a vertex, and a groove bottom vein (5) of the annular groove (2) is zigzag along the circumferential direction.

## Description

### Field of the Invention

The present invention belongs to the technical field of tread patterns, and in particular to a tire tread pattern provided with an anti-stone structure.

### Background of the Invention

A pneumatic tire is provided with circumferential and radial grooves and ground portions separated by the grooves in its tread portion, thereby forming patterns that satisfy the tire performance and the conditions of use. When the tire moves on roads with stones and other poor pavements, the following problems arise. The stones enter the grooves of the pneumatic tire, and the stones are unlikely to discharge because the ground portions generate distortion under loads. The stones with different sizes gradually enter the bottoms of the grooves after entering the grooves to damage the bottoms of the grooves and may damage a belt ply, resulting in a fault and affecting the service life of the tire.

Thus, the pneumatic tire is provided with a stone clamping prevention tread structure, which is mainly provided with a stone discharge platform at the bottom of the pattern groove in the circumferential direction of the tire, the radius size of the stone discharge platform gradually changes from top to bottom, the stone discharge platform has an energy storage function, so that the stones clamped in the main groove are finally expelled out from the main groove and are discharged, and thus the stone discharge effect of the tire tread is improved.

The patent with a publication No. CN101646572 A discloses that a fixed rolling surface is formed by a plurality of equilateral triangles on a protrusion point of the pattern groove, so that the stones are easily discharged from the groove.

The patent US2014/0299243 A1 discloses that a rubber door that is easily deformed is arranged on an annular ditch to reduce the airflow in a tire travelling process so as to reduce the noise to a certain extent.

However, the above-mentioned anti-stone structure is liable to concentrate the stress at the root of the stone discharge platform in the process of use, and the stone discharge platform may be event cut off, therefore a crack is generated on the bottom of the groove, the belt ply is locally damaged, a better stone clamping prevention effect of the tire cannot be guaranteed, and the defect that the service life of the tire is affected by stone clamping still exists. Therefore, the anti-stone structure of the tire has yet to be improved.

### Summary of the Invention

In order to solve the above problems, the present invention provides a tire tread pattern provided with an anti-stone structure.

The objective of the present invention is implemented in the following manner: A tire tread pattern provided with an anti-stone structure includes a tread pattern, the tread pattern is composed of an annular groove that is continuous along the circumferential direction and a pattern block, the annular groove is defined by a discontinuous first chamfered edge, a first polygonal surface parallel to the tread is arranged at a portion in the annular groove that is concave relative to the first chamfered edge, a second chamfered edge and a third chamfered edge of the first polygonal surface separately extend along the groove bottom direction to form two second polygonal surfaces, the two second polygonal surfaces and the first polygonal surface share a vertex S; and a groove bottom vein of the annular groove is zigzag along the circumferential direction.

A vertical distance between the vertex S and the bottom of the annular groove is T, and the vertical distance between the tread and the bottom of the annular groove is TD, and TD≤4T.

The two adjacent second polygonal surfaces share a side edge, wherein the concave side edge is a corner line, and an included angle between the corner line and a vertical direction is α1, and the included angle between the second polygonal surface and the vertical direction is α2, and the value ranges of α1 and α2 are 5-45°.

A horizontal distance between two adjacent corner lines is H, the horizontal distance between two opposite first chamfered edges is D, and H≤3D.

The horizontal distance H between all adjacent corner lines is unequal.

Compared with the prior art, the present invention provides the tire tread pattern provided with the anti-stone structure, the stone discharge function is mainly embodied in two aspects: on one hand, the first polygonal surface parallel to the tread directly plays the role of stone discharge, on the other hand, as the angles of inclined planes on two sides of the annular groove are varied, the stones are unlikely to form very stable fixing points therein, and thus are discharged easily in the tire travelling process, and accordingly good stone discharge performance of the tire is guaranteed; and the tire is guaranteed to have very good wear resistance, and good noise reduction performance is also available. In addition, the design of the vertex S can realize the stone discharge function of the tire, and meanwhile the projections can partially block the airflow in the tire travelling process so as to realize noise reduction. In addition, as the first polygonal surface is parallel to the tread, early abnormal wear of the tire can be pre-warned; and the adjacent corner lines adopt a variable width design, thereby realizing a different variable pitch design, and the noise of the tire can be reduced.

### Brief Description of the Drawings

Fig.1 is a structural schematic diagram of a tire pattern of the present invention.
Fig.2 is a sectional view in an A-A direction of Fig.1.
Fig.3 is a sectional view in a B-B direction of Fig.1.

1 represents a tire pattern; 2 represents an annular groove; 3 represents a pattern block; 4 represents a second chamfered edge; 5 represents a groove bottom vein; 6 represents a first chamfered edge; 7 represents a corner line; 8 represents a first polygonal surface; 9 represents a second polygonal surface; and 10 represents a third chamfered edge.

### Detailed Description of the Embodiments

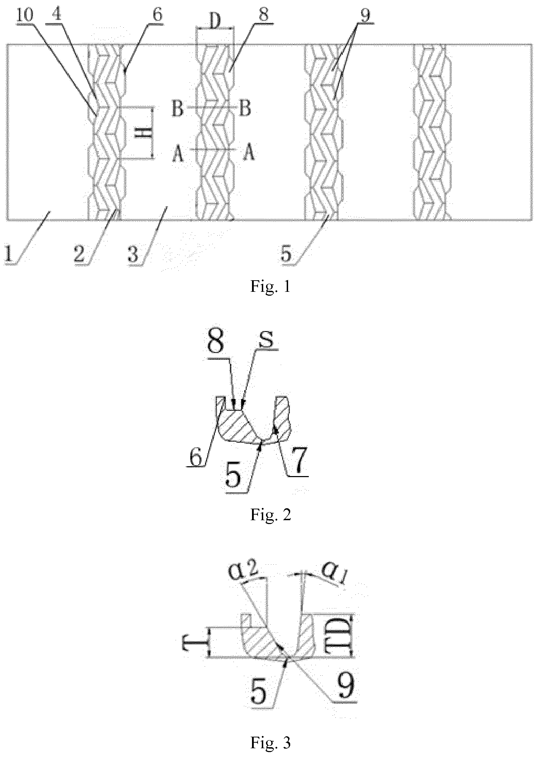

As shown in Fig.1 to Fig.3, a tire tread pattern provided with an anti-stone structure includes a tread pattern 1, the tread pattern 1 is composed of an annular groove 2 that is continuous along the circumferential direction and a pattern block 3, the annular groove 2 is defined by a discontinuous first chamfered edge 6, a first polygonal surface 8 parallel to the tread is arranged at a portion in the annular groove 2 that is concave relative to the first chamfered edge 6, a second chamfered edge 4 and a third chamfered edge 10 of the first polygonal surface 8 separately extend along the groove bottom direction to form two second polygonal surfaces 9, the two second polygonal surfaces 9 and the first polygonal surface 8 share a vertex S; and a groove bottom vein 5 of the annular groove 2 is zigzag along the circumferential direction.

The first chamfered edge 6 is an edge where the intersection of the tread and the first polygonal surface 8 is flush with the tread.

A vertical distance between the vertex S and the bottom of the annular groove 2 is T, and the vertical distance between the tread and the bottom of the annular groove 2 is TD, and TD≤4T. The design of the vertex S can realize the stone discharge function of the tire, and meanwhile the projections can partially block the airflow in a tire travelling process so as to realize noise reduction.

The two adjacent second polygonal surfaces 9 share a side edge, wherein the concave side edge is a corner line 7, and an included angle between the corner line 7 and a vertical direction is α1, and the included angle between the second polygonal surface 9 and the vertical direction is α2, and the value ranges of α1 and α2 are 5-45°.

A horizontal distance between two adjacent corner lines 7 is H, and the horizontal distance between two opposite first chamfered edges 6 is D, and H≤3D.

The horizontal distance H between all adjacent corner lines 7 is unequal.

Compared with the prior art, the present invention provides the tire tread pattern provided with the anti-stone structure, the stone discharge function is mainly embodied in two aspects: on one hand, the first polygonal surface parallel to the tread directly plays the role of stone discharge, on the other hand, as the angles of inclined planes on two sides of the annular groove are varied, the stones are unlikely to form very stable fixing points therein, and thus are discharged easily in the tire travelling process, and accordingly good stone discharge performance of the tire; and the tire is guaranteed to have very good wear resistance, and good noise reduction performance is also available. In addition, the design of the vertex S can realize the stone discharge function of the tire, and meanwhile the projections can partially block the airflow in the tire travelling process so as to realize noise reduction. In addition, as the first polygonal surface is parallel to the tread, early abnormal wear of the tire can be pre-warned; and the adjacent corner lines adopt a variable width design, thereby realizing a different variable pitch design, and the noise of the tire can be reduced.

The foregoing description is only a preferred embodiment of the present invention, it should be noted that it will be apparent to those skilled in the art that various changes and improvements may be made without departing from the overall concept of the present invention, and these changes and improvements should also be deemed as the protection scope of the present invention.

## Claims

1. A tire tread pattern provided with an anti-stone structure, comprising a tread pattern (1), wherein the tread pattern (1) is composed of an annular groove (2) that is continuous along the circumferential direction and a pattern block (3), the annular groove (2) is defined by a discontinuous first chamfered edge (6), a first polygonal surface (8) parallel to the tread is arranged at a portion in the annular groove (2) that is concave relative to the first chamfered edge (6), a second chamfered edge (4) and a third chamfered edge (10) of the first polygonal surface (8) separately extend along the groove bottom direction to form two second polygonal surfaces (9), the two second polygonal surfaces (9) and the first polygonal surface (8) share a vertex S; and a groove bottom vein (5) of the annular groove (2) is zigzag along the circumferential direction.

2. The tire tread pattern provided with the anti-stone structure of claim 1, wherein a vertical distance between the vertex S and the bottom of the annular groove (2) is T, and the vertical distance between the tread and the bottom of the annular groove (2) is TD, and TD≤4T.

3. The tire tread pattern provided with the anti-stone structure of claim 1, wherein the two adjacent second polygonal surfaces (9) share a side edge, wherein the concave side edge is a corner line (7), and an included angle between the corner line (7) and a vertical direction is α1, and the included angle between the second polygonal surface (9) and the vertical direction is α2, and the value ranges of α1 and α2 are 5-45°.

4. The tire tread pattern provided with the anti-stone structure of claim 1, wherein a horizontal distance between two adjacent corner lines (7) is H, and the horizontal distance between two opposite first chamfered edges (6) is D, and H≤3D.

5. The tire tread pattern provided with the anti-stone structure of claim 4, wherein the horizontal distance H between all adjacent corner lines (7) is unequal.
